Europäisches Patentamt

European Patent Office

Office européen des brevets

(19)

(11) Numéro de publication : **0 041 004**
**B1**

(12) **FASCICULE DE BREVET EUROPÉEN**

(45) Date de publication du fascicule du brevet :
**19.12.84**

(51) Int. Cl.³ : **B 29 D   3/00**, B 29 F   1/10

(21) Numéro de dépôt : **81400753.0**

(22) Date de dépôt : **12.05.81**

(54) **Procédé pour insérer sans saillie un élément rapporté.**

(30) Priorité : **13.05.80 FR 8010723**

(43) Date de publication de la demande :
**02.12.81 Bulletin 81/48**

(45) Mention de la délivrance du brevet :
**19.12.84 Bulletin 84/51**

(84) Etats contractants désignés :
**AT BE CH DE GB IT LI LU NL SE**

(56) Documents cités :
**FR-A- 1 557 441**
**FR-A- 1 593 056**
**FR-A- 1 602 216**
**FR-A- 2 350 189**
**FR-E-    89 746**
**GB-A-   980 617**
**GB-A- 2 012 662**
**NL-C-    27 261**
**US-A- 3 074 112**
**US-A- 3 272 681**

(73) Titulaire : **Etablissements Marcel COTTE**
**Les Sarraix - Celles-sur-Durolles**
**F-63250 Chabreloche (FR)**

(72) Inventeur : **Cotte, André**
**Les Sarraix - Celles-sur-Durolle**
**F-63250 Chabreloche (FR)**

(74) Mandataire : **Derambure, Christian**
**Cabinet BUGNION ASSOCIES SARL 116, boulevard**
**Haussmann**
**F-75008 Paris (FR)**

## Description

L'invention concerne un procédé et un dispositif pour insérer un élément rapporté à la surface d'une pièce principale obtenue au moyen d'un moule et également la pièce obtenue par la mise en œuvre du procédé ou dispositif, notamment un manche d'outil à main ou de coutellerie.

On connaît déjà des procédés pour insérer un élément rapporté ayant initialement une face extérieure au moins pseudo-plate à la surface notamment incurvée d'une pièce principale rigide obtenue au moyen d'un moule rempli avec le matériau constitutif de la pièce principale, tel qu'une matière plastique. Dans une forme d'exécution connue d'un dispositif de mise en œuvre d'une variante de ce procédé, le moule comporte une pièce interne fixe le traversant de part en part, renflée à sa partie extrême adjacente à la zone du moule correspondant à la surface de la pièce principale où doit se trouver l'élément rapporté. Dans une première phase du procédé, on réalise la pièce principale. Du fait de la présence de la pièce interne du moule, la pièce principale comporte un trou la traversant de part en part, débouchant à l'endroit de sa surface incurvée où doit se trouver l'élément rapporté, par une zone élargie servant d'assise. Dans une deuxième phase, on introduit dans le trou un téton associé rigidement et perpendiculairement à l'élément, du côté de sa face interne, jusqu'à ce que le bord périphérique de la face interne de l'élément vienne s'appliquer sur la zone d'assise du trou.

Dans une troisième phase, on solidarise rigidement l'élément rapporté à la pièce principale, par exemple par rivetage. Dans ce cas, on introduit un second élément complémentaire du premier par la seconde extrémité du trou opposé à la zone élargie. L'élément rapporté ayant une forme initiale pseudo-plate alors que la surface de la pièce principale est incurvée, il s'ensuit que la face externe de l'élément rapporté vient généralement en saillie par rapport à la surface incurvée de la pièce principale. C'est pourquoi dans une quatrième phase du procédé, on procède à une opération de polissage ou similaire pour supprimer cette saillie.

Ainsi, ce procédé est long, coûteux, délicat à mettre en œuvre. En outre, il nécessite l'emploi d'un élément rapporté comprenant un téton ce qui en accroît le coût. Egalement, ce procédé connu nécessite la présence d'un second élément également rapporté, à l'opposé du premier élément.

On connaît aussi des procédés pour fixer une étiquette peu épaisse, souple et déformable, par exemple en papier, sur la surface extérieure d'un corps creux en matière synthétique, tel qu'une bouteille, dans lesquels on place cette étiquette dans un moule, en son emplacement relatif définitif et, ensuite, on procède à la réalisation du corps creux par soufflage ou similaire. Dans une première variante (brevet français n° 1 602 216) l'étiquette est introduite par l'ouverture du moule ouvert vide puis plaquée sur la surface interne du moule par des moyens appropriés, notamment par dépression.

Dans une seconde variante (brevet américain n° 3 272 681), l'étiquette est placée sur un poinçon coopérant avec une ouverture correspondante du moule, le poinçon comportant des moyens de dépression, c'est-à-dire de maintien de l'étiquette.

Cependant ces procédés connus sont d'usage limité et ne peuvent s'appliquer au cas particulier ici considéré, dans lequel : l'élément rapporté n'est pas totalement souple, déformable et peu épais mais au contraire est rigide, présentant une certaine tenue et pouvant avoir une certaine épaisseur ; le corps n'est pas creux et réalisé par soufflage mais plein. Dans ces procédés connus, l'étiquette vient en surépaisseur sur le corps creux ce qui ne constitue pas une véritable insertion comme il est souhaité dans l'invention dans laquelle la face extérieure de l'élément rapporté vient en prolongement de la face extérieure de la pièce principale.

La présente invention vise à remédier à ces inconvénients et à cet effet elle propose un procédé pour insérer sans saillie un élément rapporté rigide n'étant malléable qu'à l'aide d'une force considérable, de forme initiale au moins pseudo-plate à la surface notamment incurvée d'une pièce principale rigide sensiblement pleine réalisée en utilisant un moule et, avant de remplir le moule avec le matériau constitutif de la pièce principale, en introduisant l'élément dans le moule, en le plaçant dans la position relative correspondante à l'emplacement qu'il doit occuper sur la pièce réalisée à partir du moule, en maintenant ensuite en permanence l'élément dans cette position caractérisé par le fait qu'on déforme à force l'élément pour qu'il présente une forme complémentaire de celle du moule, et à cet effet on presse localement sur la partie centrale de l'élément à l'opposé de là où on le supporte. Ce procédé ne comporte aucune phase de polissage ou similaire postérieure au remplissage du moule et qui aurait exclusivement pour objet de supprimer toute saillie de l'élément rapporté par rapport à la pièce principale. Le procédé comporte une phase unique de réalisation de la pièce principale et de solidarisation de l'élément rapporté à cette pièce principale du fait même de cette réalisation.

L'invention concerne aussi un dispositif pour la mise en œuvre du procédé et à cet effet elle propose un dispositif pour insérer sans saillie un élément rapporté rigide n'étant malléable qu'à l'aide d'une force considérable, de forme générale initiale au moins pseudo-plate, à la surface notamment incurvée d'une pièce principale rigide sensiblement pleine, comportant un moule pour réaliser la pièce principale ayant une ouverture de forme, dimension, position relative correspondant aux contour, dimension, position relative de l'élément rapporté dans le moule, des moyens de remplissage du moule avec le matériau constitutif de cette pièce principale, des moyens pour placer et maintenir l'élément rapporté dans la position relative qu'il doit occuper dans le moule et qui correspond à l'emplacement de l'élément rapporté sur la pièce réalisée grâce à ce moule caractérisé en ce qu'il comporte des moyens pour déformer l'élément rapporté pour qu'il présente une forme complémentaire de celle du moule, ces derniers étant communs partiellement ou en totalité avec les moyens pour maintenir l'élément rapporté, les moyens de maintien de l'élément rapporté comprenant en combinaison des moyens support formant mandrin et des moyens adaptés pour exercer une pression locale sur la partie centrale de l'élément rapporté, les moyens pour déformer l'élément rapporté étant constitués par la forme de la surface d'appui des moyens support correspondant à celle du moule à l'endroit de son ouverture et par des moyens de pression placés à l'opposé des moyens support.

L'invention offre par rapport à l'état connu de la technique de nombreux avantages ; le procédé est d'une mise en œuvre plus simple qu'auparavant puisqu'il n'est pas nécessaire de prévoir une phase spécifique de solidarisation de l'élément rapporté et une phase spécifique de polissage.

Ces avantages sont obtenus sans augmenter substantiellement la complexité du dispositif pour la mise en œuvre du procédé. Enfin, la pièce obtenue par la mise en œuvre du procédé ou au moyen du dispositif est d'une finition supérieure à celle réalisée précédemment et l'élément rapporté n'a pas à comporter un téton ou similaire de fixation.

Les autres avantages de l'invention résulteront de la description qui suivra en référence aux dessins annexés dans lesquels :

Les figures 1, 2, 3, 4 et 5 sont cinq vues schématiques en coupe illustrant un dispositif suivant l'invention à différentes étapes opératoires.

La figure 6 est une vue schématique en coupe illustrant la pièce obtenue par la mise en œuvre du procédé et au moyen du dispositif suivant l'invention.

La figure 7 est une vue en coupe longitudinale, d'une forme d'exécution du dispositif de l'invention (moule ouvert).

L'invention concerne un procédé et un dispositif pour insérer sans saillie un élément rapporté 1 rigide mais présentant une certaine malléabilité, c'est-à-dire pouvant être déformé en exerçant une force suffisante, de forme générale initiale au moins pseudo-plate, d'épaisseur plus ou moins importante, à la surface 2, notamment incurvée, d'une pièce principale 3 rigide pleine ou sensiblement pleine.

Le dispositif comporte un moule 4 présentant intérieurement la forme extérieure de la pièce principale 3 et des moyens 5 de remplissage du moule 4 avec le matériau constitutif de la pièce 3 dit par la suite le matériau, en vue de réaliser celle-ci. Le moule 4 et les moyens 5 ne font pas en soi partie de l'invention. Les moyens 5 comprennent par exemple une ouvertue dans le moule 4 et des moyens d'injection du matériau.

Par «insérer» on entend associer de manière que l'élément rapporté fasse partie intégrante de la pièce principale, l'élément rapporté étant inclus dans la pièce principale, une zone de la surface externe de celle-ci étant constituée par la pièce rapportée qui est ainsi enfoncée dans la pièce principale et ce, sans saillie.

Dans le procédé avant que de remplir le moule 4 avec le matériau on réalise les phases opératoires successives suivantes :

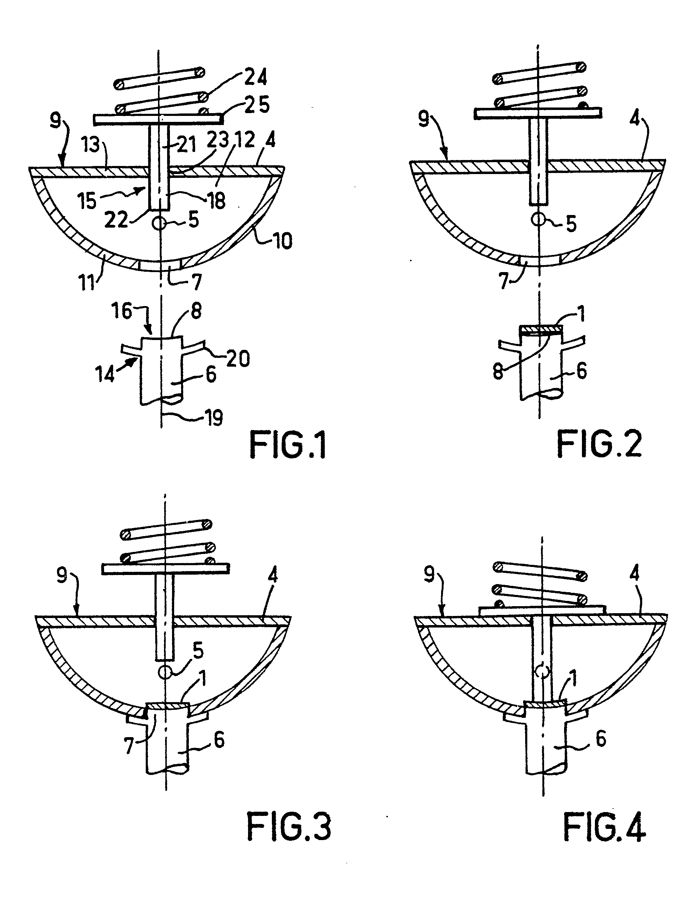

On introduit l'élément 1 ayant sa forme initiale dans le moule 4 et on le place dans la position relative correspondant à l'emplacement qu'il doit occuper sur la pièce 3 réalisée au moyen de ce moule 4 (figure 3). On maintient ensuite en permanence l'élément 1 dans cette position. Enfin, on déforme à force l'élément 1 pour qu'il présente une forme complémentaire de celle du moule 4 (figure 4).

Le procédé ne comporte aucune phase opératoire de polissage ou similaire, finale ou postérieure au remplissage du moule 4 avec le matériau qui aurait exclusivement pour objet de supprimer toute saillie de l'élément rapporté 1 par rapport à la pièce principale 3. Malgré l'absence d'une telle phase opératoire, l'élément 1 est inséré à la surface de la pièce 3 sans saillir de celle-ci.

Ainsi, le procédé comporte une phase unique de réalisation de la pièce principale 3 et de solidarisation de l'élément rapporté 1 à la pièce principale 3 puisque la réalisation de la pièce principale 3 a pour fonction également d'assurer la solidarisation de l'élément rapporté. Une fois la pièce principale 3 réalisée, il n'y a aucun mouvement relatif de celle-ci par rapport à l'élément rapporté 1 inséré sans possibilité de désengagement intempestif. La pièce principale 3 présente une forme complémentaire de celle de l'élément rapporté 1, celui-ci étant placé dans une « réserve » de la pièce principale 3.

Pour placer l'élément 1 dans la position relative qu'il doit occuper dans le moule 4, on réalise préférentiellement les phases opératoires successives suivantes : on place d'abord l'élément 1 sur des moyens support 6 de façon manuelle, semi-automatique ou automatique. Puis on effectue un mouvement relatif des moyens support 6 et du moule 4 jusqu'à amener l'élément 1 dans ladite position relative. Préférentiellement on maintient le moule 4 dans une position fixe et on déplace les moyens 6, préférentiellement, à coulissement avec éventuellement une rotation, préférentiellement à coulissement vertical ascendant, de façon manuelle, semi-automatique ou automatique.

Pour maintenir l'élément 1 dans la position relative qu'il doit occuper dans le moule 4, préférentiellement, on applique fermement l'élément 1 contre les moyens support 6. L'élément 1 étant rigide, cette application peut n'être que ponctuelle ou limitée sans devoir nécessairement concerner la totalité de la surface de l'élément 1, notamment opposée aux moyens support 6, ce qui permet de constituer dans la pièce 3 une assise pour l'élément 1.

Pour amener l'élément 1 à une forme complémentaire de celle du moule 4, on utilise un moule 4 présentant une ouverture 7 située dans la position relative de l'élément 1 et des moyens support 6 présentant une surface d'appui 8 de l'élément 1 de forme et encombrement correspondant précisément à ceux de cette ouverture 7. On applique à force l'élément 1 contre la surface d'appui 8 préférentiellement mécaniquement et automatiquement, jusqu'à le déformer pour qu'il épouse la forme de la surface 8. La déformation de l'élément 1 peut résulter d'une augmentation du degré d'application de l'élément 1 contre les moyens support 6. Par conséquent elle en présente les caractéristiques, telles que l'application ponctuelle ou limitée.

Le remplissage du moule 4 avec le matériau est réalisé grâce aux moyens 5. Lors de ce remplissage, l'élément 1 est maintenu dans sa position relative. Ensuite, on ouvre le moule et la pièce 3 comportant l'élément 1 inclus et ne saillant pas de la surface 2 peut être évacuée du moule 4. Le remplissage même du moule c'est-à-dire la réalisation de la pièce 3 assure la solidarisation avec l'élément 1.

Le dispositif 9 pour la mise en œuvre du procédé comporte d'abord le moule 4 et les moyens de remplissage 5.

Le moule 4 se présente par exemple sous la forme d'une coquille 10 de forme allongée ayant un fond inférieur 11 incurvé à concavité tournée vers le haut, pourvu d'une ouverture principale 12 pour le démoulage de la pièce 3 réalisée, susceptible d'être fermée par une paroi supérieure 13 amovible. Les moyens de remplissage 5 comportent par exemple une ouverture dans une paroi d'extrémité de la coquille 10.

Le dispositif 9 comprend ensuite des moyens 14 pour placer l'élément 1 dans la position relative qu'il doit occuper dans le moule 4 et qui correspond à l'emplacement de l'élément 1 sur la pièce 3 réalisée grâce au moule 4 ; des moyens 15 pour maintenir l'élément 1 dans cette position, des moyens 16 pour déformer à force l'élément 1 pour qu'il présente une forme complémentaire de celle du moule 4.

Le dispositif 9 est dépourvu de moyens de polissage ou similaire spécifiquement destinés à supprimer toute saillie de l'élément rapporté 1 par rapport à la pièce principale 3.

Les moyens 15 et les moyens 16 sont au moins partiellement communs.

Le moule 4 comporte une ouverture 7 de forme, dimensions position relative correspondant aux contour, dimension, position relative de l'élément 1 dans le moule 4. Naturellement, un moule peut comporter plusieurs ouvertures telles que 7 si la pièce principale 3 comporte plusieurs éléments rapportés tels que 1.

Les moyens 14 comprennent des moyens support 6 pour l'élément 1 et des moyens 17 manuels, semi-automatiques ou automatiques pour opérer un déplacement relatif des moyens support 6 et du moule 4 en vue d'amener les moyens support 6 et l'ouverture 7 en regard l'un de l'autre. Les moyens 17 comprennent éventuellement des moyens de guidage notamment à coulissement et éventuellement à rotation. Préférentiellement, le moule 4 reste fixe en ce qui concerne la coquille 10 et les moyens 17 agissent sur les moyens support 6.

Les moyens 15 comprennent en combinaison les moyens support 6 et les moyens de pression 18 susceptibles de coopérer avec l'élément 1 à l'opposé des moyens support 6, de façon ponctuelle ou limitée, comme déjà indiqué.

Les moyens 16 pour déformer l'élément 1 sont constitués par la forme donnée à la surface d'appui 8 des moyens support 6, forme correspondant à celle du moule 4 à l'endroit de son ouverture 7 et également par les moyens de pression 18.

L'ouverture 7 est préférentiellement placée dans la partie inférieure du fond 11. Les moyens support 6 sont préférentiellement placés à l'extérieur du moule 4, notamment en-dessous de celui-ci. Les moyens de pression 18 sont préférentiellement placés au moins partiellement à l'intérieur du moule 4.

Les moyens support 6 se présentent sous la forme d'un mandrin d'axe 19 dont la face d'extrémité notamment supérieure constitue la surface d'appui 8. En l'occurrence cette surface d'appui 8 est incurvée et concave. La concavité étant tournée vers le moule 4.

Préférentiellement, le mandrin comporte une saillie périphérique 20 de forme complémentaire du moule 4 au bord de l'ouverture 7, saillie 20 venant s'appliquer sur le moule à l'extérieur lorsque l'élément 1 est dans sa position relative correcte. La coopération par blocage de la saillie 20 sur le moule 4 a comme fonctions de faire en sorte que la fin de course de coulissement du mandrin corresponde à la position relative correcte de l'élément 1 dans le moule 4 et d'assurer une étanchéité satisfaisante entre le mandrin et le moule 4 à l'endroit de l'ouverture 7 pour le remplissage du moule. Des moyens d'étanchéité complémentaires peuvent être associée à la saillie 20. Cependant, cette étanchéité n'a pas à être élevée, le moule n'étant pas rempli sous pression comme c'est le cas pour des objets creux de l'état de la technique.

Les moyens 17 peuvent faire l'objet de nombreuses formes d'exécution à la portée de l'homme de l'art comportant des coulisses, vérins, vis de serrage, moteurs, etc.

La surface d'appui 8 vient très exactement compléter et prolonger la surface interne du moule 4 à l'endroit de l'ouverture 7.

Les moyens de pression 18 se présentent par exemple sous la forme d'un pointeau 21 d'axe 19, dirigé vers le bas. Sa partie d'extrémité 22 adjacente à l'élément 1 est préférentiellement d'un encombrement transversal plus faible que celui de l'élément 1, notamment en forme de pointe.

Cette partie d'extrémité 22 est destinée à venir se placer dans la partie centrale de l'élément 1, sur sa face interne opposée à sa face externe appliquée sur la surface d'appui 8. Le pointeau 21 traverse une perforation 23 d'axe 19 ménagé dans la paroi 13. Le pointeau 21 est monté à coulissement le long de l'axe 19 et il lui est donc associé des moyens de guidage appropriés et des moyens d'entraînement notamment de même type général que les moyens 17. Au pointeau 21 peuvent être associés des moyens élastiques 24 sollicitant le pointeau 21 en permanence en direction de l'ouverture 7. Au pointeau 21 peut être associée une saillie périphérique 25 susceptible de venir s'appliquer sur la paroi 13 à la périphérie de la perforation 23 lorsque le pointeau 21 est dans sa position de maintien de l'élément 1 après sa conformation. Cette saillie 25 est destinée à remplir les mêmes fonctions que la saillie 20.

On a représenté sur la figure 1 le dispositif 9 avant sa mise en œuvre. La figure 2 illustre le dispositif comportant un élément 1 placé sur les moyens support 6 notamment la surface d'appui 8, l'élément 1 ayant une forme plate.

Sur la figure 3 est représenté le dispositif 9 après que les moyens support 6 aient été déplacés par les moyens 17 pour que l'élément 1 soit placé dans sa position relative correcte c'est-à-dire en regard de l'ouverture 7. L'élément 1 a toujours la forme plate.

Sur la figure 4 est représenté le dispositif 9 après que les moyens 16 aient été mis en œuvre, c'est-à-dire le pointeau 21 appliqué sur l'élément 1 conformé à la forme de la surface d'appui 8.

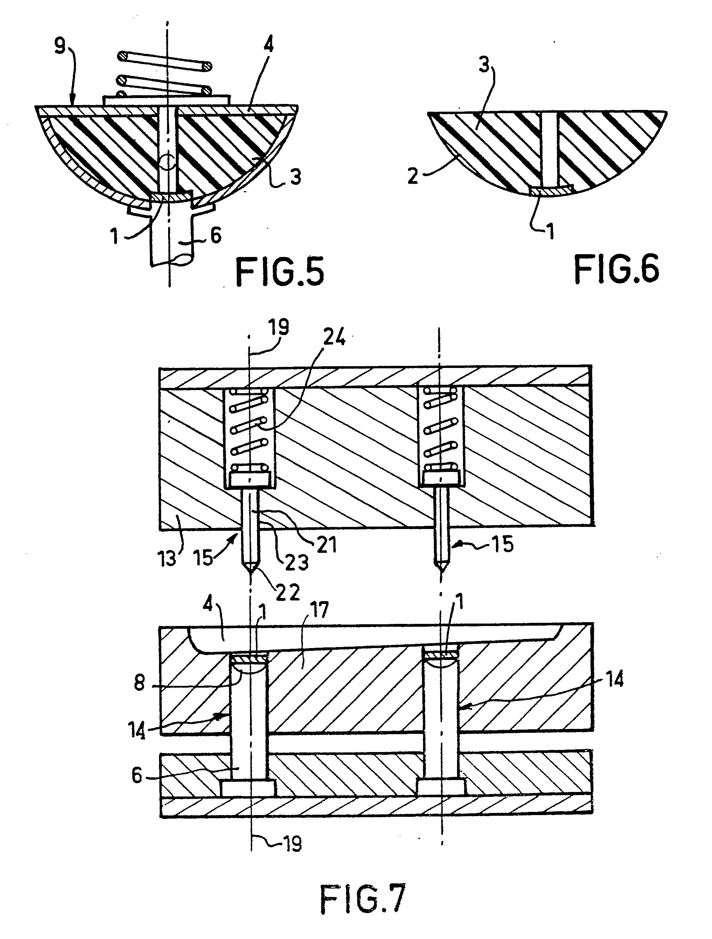

La figure 5 illustre le dispositif 9 après que le moule ait été rempli avec le matériau constitutif de la pièce principale 3.

Sur la figure 7 est représentée une forme d'exécution possible d'un dispositif selon l'invention pour insérer deux éléments rapportés 1 sur une même pièce principale. Ces deux éléments rapportés 1 — et les ensembles de moyens afférents 14, 15, 16 — peuvent être plus ou moins proches ou éloignés les uns des autres, notamment jusqu'à être adjacents.

Dans cette forme d'exécution, le moule 4 et la paroi 13 ont de façon connue en soi une forme générale de blocs, comportant des perçages de coulissement du mandrin 6 et du pointeau 21. Les différents mandrins 6 sont associés rigidement à une pièce également en forme de bloc — pour permettre un déplacement simultané du mandrin 6 — qui fait partie des moyens 17 et qui peut venir en blocage sur le bloc constituant le moule 4 pour limiter la course des mandrins 6. Le perçage pour les mandrins 6 permet aussi une meilleure mise en place de la pièce 1.

Les moyens 24 sont placés dans un logement du bloc constituant la paroi 13, fermée, à l'opposé du pointeau 21 par un élément de fermeture qui constitue aussi un moyen pour limiter la course des pointeaux 21, lesquels sont fonctionnellement indépendants les uns des autres.

La figure 6 illustre la pièce principale 3 obtenue par la mise en œuvre du procédé et du dispositif qui viennent d'être décrits. Cette pièce est par exemple un manche d'outil à main ou de coutellerie et comporte un élément rapporté 1 placé à la surface incurvée 2. L'élément rapporté 1 présente une certaine malléabilité de manière qu'il puisse être assez aisément déformé par les moyens 16. L'élément 1 est dépourvu de tout téton ou similaire de fixation à la pièce principale 3.

Une fois la pièce principale réalisée, elle comporte à l'arrière de l'élément 1 un trou libre la traversant de part en part.

**Revendications**

1. Procédé pour insérer sans saillie un élément rapporté rigide (1), n'étant malléable qu'à l'aide d'une force considérable, de forme initiale au moins pseudo-plate, à la surface (2), notamment incurvée d'une pièce principale rigide (3) sensiblement pleine, réalisée en utilisant un moule (4) et, avant de remplir le moule avec le matériau constitutif de la pièce principale, en introduisant l'élément dans le moule, en le plaçant dans la position relative correspondante à l'emplacement qu'il doit occuper sur la pièce réalisée à partir du moule, en maintenant ensuite en permanence l'élément dans cette position caractérisé par le fait qu'on déforme à force l'élément (1) pour qu'il présente une forme complémentaire de celle du moule (4), et à cet effet on presse localement sur la partie centrale de l'élément (1) à l'opposé de là où on le supporte.

2. Dispositif pour insérer sans saillie un élément rapporté rigide (1) n'étant malléable qu'à l'aide d'une force considérable, de forme générale initiale au moins pseudo-plate, à la surface (2) notamment incurvée d'une pièce principale rigide (3) sensiblement pleine, comportant un moule (4) pour réaliser la pièce principale ayant une ouverture (7) de forme, dimension, position relative correspondant aux contour, dimension, position relative de l'élément rapporté dans le moule, des moyens (5) de remplissage du moule avec le matériau constitutif de cette pièce principale, des moyens pour placer et maintenir l'élément rapporté dans la position relative qu'il doit occuper dans le moule et qui correspond à l'emplacement de l'élément rapporté sur la pièce réalisée grâce à ce moule caractérisé en ce qu'il comporte des moyens pour déformer l'élément rapporté pour qu'il présente une forme complémentaire de celle du moule, ces derniers étant communs partiellement ou en totalité avec les moyens (15) pour maintenir l'élément rapporté (1), ces derniers comprenant en combinaison des moyens support (6) formant mandrin et des moyens adaptés pour exercer une pression (18) locale sur la partie centrale de l'élément rapporté (1), les moyens (16) pour déformer l'élément rapporté (1) étant constitués par la forme de la surface d'appui (8) des moyens support (6) correspondant à celle du moule (4) à l'endroit de son ouverture (7) et par des moyens de pression (18) placés à l'opposé des moyens support (6).

3. Dispositif suivant la revendication 2, caractérisé par le fait que l'ouverture (7) est placée dans la partie inférieure du moule (4).

4. Dispositif suivant l'une quelconque des revendications 2 et 3, caractérisé par le fait que les moyens de pression (18) sont au moins partiellement à l'intérieur du moule (4), les moyens (6) et (18) étant coaxiaux d'axe (19).

5. Dispositif suivant l'une quelconque des revendications 2 à 4, caractérisé par le fait que les moyens de pression (18) se présentent sous la forme d'un pointeau (21) ayant dans sa partie d'extrémité (22) un encombrement transversal plus faible que celui de l'élément rapporté (1), des moyens élastiques (24) étant associés au pointeau (21) et le sollicitant vers l'ouverture (7).

6. Dispositif suivant l'une quelconque des revendications 2 à 5, caractérisé par le fait que le mandrin des moyens de support (6) et le pointeau (21) comportent des saillies périphériques (20), (25) ayant comme fonction de limiter leur course respective et de réaliser l'étanchéité avec le moule (4).

## Claims

1. A method for inserting without projection an added element which is rigid and is malleable only by means of a considerable force and has an at least pseudo-flat initial shape, in the for example curved surface of a substantially solid rigid main member, produced by using a mould and, before filling the mould with the material of which the main member is made, introducing the element in the mould by placing it in the relative position corresponding to the place it must occupy on the member made with the mould, and thereafter permanently maintaining the element in this position, characterised in that the element (1) is forcefully deformed so that it has a shape complementary to that of the mould (4), and for this purpose a pressure is exerted locally on the central part of the element (1) opposite to where it is supported.

2. A device for inserting without projection an added element which is rigid and is malleable only by means of considerable force and has an initial general shape which is at least pseudo-flat, in the for example curved surface of a rigid substantially solid main member, comprising a mould for forming the main member having an opening having a shape, dimension and relative position corresponding to the contour, dimension, and relative position of the element in the mould, means for filling the mould with the material of which this main member is composed, means for placing and maintaining the element in the relative position it must occupy in the mould and which corresponds to the position of the element on the member made by means of this mould, and means which are at least partly common for deforming the element so that it has a shape complementary to the shape of the mould, characterised in that the means (15) for maintaining the element (1) comprise in combination support means (6) forming a mandrel and means adapted to exert a local pressure (18) on the central part of the element (1), the means (16) for deforming the element (1) being formed by the shape of the bearing surface (8) of the support means (6) corresponding to the shape of the mould (4) in the region of its opening (7) and by pressure means (18) placed in opposed relation to the support means (6).

3. A device according to claim 2, characterised in that the opening (7) is placed in the lower part of the mould (4).

4. A device according to either of the claims 2 and 3, characterised in that the pressure means (18) are at least partly inside the mould (4), the means (6) and (18) being coaxial on the axis (19).

5. A device according to any one of the claims 2 to 4, characterised in that the pressure means (18) are in the form of a punch (21) having in its end part (22) a transverse overall size which is smaller than that of the element (1), resiliently yieldable means (24) being associated with the punch (21) and biasing it toward the opening (7).

6. A device according to any one of the claims 2 to 5, characterised in that the mandrel of the support means (6) and the punch (21) have peripheral projections (20), (25) having for function to limit their respective travel and to provide a seal with the mould (4).

## Ansprüche

1. Verfahren zum bündigen Einfügen eines steifen, nur mit einer bemerkenswerten Kraft biegbaren, anfänglich mindestens scheinbar ebenen Einsatzstückes (1) in die insbesondere gekrümmte Oberfläche (2) eines starren, im wesentlichen massiven Hauptteiles (3), bei dem man eine Form (4) verwendet und vor dem Füllen der Form mit dem das Hauptteil bildenden Material das Einsatzstück in die Form einführt, wobei man dieses in diejenige Stellung bringt, die dem Platz entspricht, den das Einsatzstück auf dem in der Form gebildeten Hauptteil einnehmen Muß, wobei man dann das einsatzstück dauernd in dieser Lage hält, dadurch gekennzeichnet, dab man das Einsatzstück (1) durch Krafteinwirkung verformt, damit es eine der Form (4) komplementäre Form annimmt und daß man zu diesem Zweck auf den mittleren Teil des Einsatzstückes (1), der dem Teil gegenüberliegt, wo man das Einsatzstück unterstützt, örtlich einen Druck ausübt.

2. Vorrichtung zum bündigen Einfügen eines steifen, nur mit Hilfe einer beträchtlichen Kraft biegbaren, in seiner allgemeinen Ausgangsform mindestens scheinbar ebenen Einsatzstückes (1) in die insbesondere gekrümmte Oberfläche (2) eines im wesentlichen massiven, starren Hauptteiles (3), mit einer Form (4) zum Bilden des Hauptteiles, die eine Öffnung (7) aufweist, deren Gestalt, Abmessung und relative Anordnung dem Umriß, der Abmessung und der relativen Lage des Einsatzstückes in der Form entspricht, mit Mitteln (5) zum Füllen der form mit dem dieses Hauptteil bildenden Material, mit mitteln, mit denen das Einsatzstück in Stellung gebracht und in derjenigen relativen Lage gehalten werden kann, die es in der Form einnehmen muß und die der Lage des einsatzstückes auf dem durch diese Form gebildeten Hauptteil entspricht, dadurch gekennzeichnet, daß Mittel vorgesehen sind, um das einsatzstück zu verformen, damit es eine der Gestalt der Form komplementäre Gestalt annimmt, wobei diese Mittel teilweise oder vollständig zu den Mitteln (15) zum Halten des Einsatzstückes (1) gehören und wobei die letztgenannten Mittel in Kombination Stützmittel (6) enthalten, die einen Dorn und geeignete Mittel (18) zum Ausüben eines örtlichen Druckes auf den mittleren Teil des Einsatzstückes (1) bilden und wobei die Mittel (16) zum Verformen des Einsatzstückes (1) einerseits durch die Gestalt der Stützfläche (8) der Stützmittel (6), die der Gestalt der Form (4) an der Stelle ihrer Öffnung (7) entspricht und andererseits durch Druckmittel (18) gebildet werden, die gegenüber den Stützmitteln (6) angeordnet sind.

3. Vorrichtung nach Anspruch 2, dadurch gekennzeichnet, daß die Öffnung (7) im unteren Teil der Form (4) angeordnet ist.

4. Vorrichtung nach einem der Ansprüche 2 und 3, dadurch gekennzeichnet, daß die Druckmittel (18) mindestens teilweise sich im Inneren der Form (4) befinden, während die Mittel (6) und (18) zu einer Achse (19) koaxial sind.

5. Vorrichtung nach einem der Ansprüche 2 bis 4, dadurch gekennzeichnet, daß die Druckmittel (18) in Form eines Körners (21) vorhanden sind, der an seinem äußersten Ende (22) eine Querabmessung hat, die geringer ist als diejenige des einsatzstückes (1), wobei dem Körner (21) elastische Mittel (24) zugeordnet sind, welche diesen gegen die Öffnung (7) drängen.

6. Vorrichtung nach einem der Ansprüche 2 bis 5, dadurch gekennzeichnet, daß der Dorn der Stützmittel (6) und der Körner (21) Umfangsvorsprünge (20), (25) aufweisen, die die Funktion haben, deren jeweiligen Hub zu begrenzen und die Abdichtung an der Form (4) herzustellen.

FIG.1

FIG.2

FIG.3

FIG.4

FIG.5

FIG.6

FIG.7